# FASCICULE DE BREVET EUROPEEN

(11) **EP 1 600 336 B1**
(45) Date de publication et mention de la délivrance du brevet: **16.09.2009**
(21) Numéro de dépôt: 05291104.7
(22) Date de dépôt: 23.05.2005
(51) Int. Cl.: B60R 19/48

(54) **Absorbeur de pare-chocs de véhicule automobile**
Stossfanger für Kraftfahrzeug
Vehicle bumper

(30) Priorité: 28.05.2004 FR 0405807
(43) Date de publication de la demande: 30.11.2005
(73) Titulaire: COMPAGNIE PLASTIC OMNIUM, 69007 Lyon (FR)
(72) Inventeur: Grando, Jérome, 38390 Vertrieu (FR); Cordebar, Francis, 01150 Lagnieu (FR)
(74) Mandataire: Remy, Vincent Noel Paul

(56) Documents cités:
- EP-A- 1 138 559
- GB-A- 2 376 075
- US-A- 6 053 051
- US-B1- 6 234 519

## Description

La présente invention concerne un absorbeur de pare-chocs de véhicule.

De plus en plus, les constructeurs automobiles intègrent des capteurs de détection d'obstacles dans les pare-chocs de véhicules.

Une telle intégration de capteur de détection d'obstacles est connue du US 6035051 A.

Ces capteurs sont généralement utilisés comme aide au stationnement ou comme assistance à la conduite. Il existe pour cela différents types de capteurs dont la distance de détection varie entre 0 et 120 mètres.

La présente invention s'intéresse plus particulièrement à l'utilisation de tels capteurs comme assistance à la conduite pour détecter des obstacles situés à une distance de moins de 20 mètres du véhicule, comme par exemple d'autres véhicules en mouvement.

Actuellement, l'intégration dans le pare-chocs d'un véhicule, des trois types de capteurs suivants est connue.

Le capteur capacitif est utilisé comme aide au stationnement. Sa portée, qui est de l'ordre de 80 cm, est trop courte pour l'utilisation requise par la présente invention. De plus, ce capteur est difficilement intégrable dans un pare-chocs en raison de sa très grande sensibilité aux éléments électriques perturbateurs. En particulier, la peau d'un pare-chocs peut être recouverte d'une peinture métallisée ou d'une couche d'apprêt conductrices qui gênent son fonctionnement.

Le capteur à ultrasons est également utilisé comme aide au stationnement. Sa portée n'est généralement que de 2 mètres et sa technologie le limite à une utilisation à des vitesses très faibles. L'intégration d'un tel capteur n'est pas très esthétique car il est nécessairement visible à l'extérieur du véhicule pour améliorer le rayonnement ultrasons. De plus, comme la zone de détection d'un capteur à ultrasons est sensiblement conique, il est difficile d'obtenir une zone de détection sans angle mort sans avoir recours à un grand nombre de capteurs à ultrasons.

Enfin, il existe des capteurs de type radar, qui rayonnent à une fréquence de 5,8, 24 ou 77 GHz et dont la portée est de l'ordre de 120 mètres. Des angles morts apparaissent également lors de l'utilisation de ce type de capteur. De plus, ces capteurs sont volumineux et demandent un positionnement précis qui est susceptible d'être modifié lors d'un choc, du fait qu'ils sont intégrés juste derrière la peau du pare-chocs.

Aucun des capteurs connus de l'état de la technique ne permet donc à la fois une détection de 0 à 20 mètres, un fonctionnement lorsque le véhicule roule, et une intégration discrète dans le pare-chocs du véhicule.

L'invention a pour but de remédier aux inconvénients des capteurs existants et propose d'utiliser les propriétés de rayonnement des antennes filaires en en intégrant une dans un pare-chocs de véhicule automobile.

A cet effet, l'invention a pour objet un absorbeur de pare-chocs de véhicule automobile, caractérisé en ce qu'il comprend un logement apte à accueillir un élément linéaire rayonnant.

Un absorbeur de pare-chocs selon l'invention permet donc l'intégration simple, robuste et invisible depuis l'extérieur du véhicule d'un capteur de détection d'obstacles.

L'élément linéaire rayonnant forme un capteur de détection d'obstacles sans angle mort, qui fonctionne quelle que soit la vitesse du véhicule, et dont la portée de détection est comprise entre 0 et 20 mètres.

Cet élément linéaire rayonnant peut être par exemple constitué par un câble coaxial relié à un dispositif électronique.

Les inventeurs ont en outre constaté que du fait que l'épaisseur de l'absorbeur permettait d'éloigner sensiblement l'élément linéaire rayonnant des pièces métalliques situées à proximité, le rayonnement de l'élément linéaire était de bonne qualité et permettait d'assurer une détection efficace des obstacles.

Dans un mode de réalisation particulier, le logement est formé par une gorge longitudinale ménagée sur un côté de l'absorbeur.

Pour maintenir en place l'élément linéaire rayonnant, le logement peut être muni de moyens mécaniques de fixation de l'élément linéaire rayonnant.

De façon optionnelle, les moyens de fixation sont formés par au moins un rétrécissement local de l'épaisseur de la gorge. En réalisant localement des bossages à l'extrémité extérieure de la gorge, l'élément linéaire une fois engagé dans la gorge est retenu par ces bossages. Les bossages peuvent être venus de moulage avec l'absorbeur.

Selon un mode de réalisation particulier, l'absorbeur comprend un écran du côté de l'absorbeur où débouche la gorge, le logement et l'écran étant conformés de manière à maintenir l'élément linéaire rayonnant à une certaine distance de pièces du véhicule susceptibles de perturber son fonctionnement.

De manière optionnelle, la gorge longitudinale et l'écran sont ménagés du coté de l'absorbeur dirigé vers l'intérieur du véhicule.

De manière optionnelle, l'écran est formé par une large bande venue de matière avec l'absorbeur et s'étendant sensiblement parallèlement au logement, la bande prenant naissance d'un côté du logement et étant apte à se recourber de manière à recouvrir intégralement le logement.

De manière optionnelle, l'extrémité libre de la bande comprend au moins un clip apte à s'insérer dans au moins un orifice ménagé dans l'absorbeur.

Dans un mode de réalisation particulier, l'écran comprend une enveloppe conductrice destinée à réaliser une barrière électromagnétique entre l'élément linéaire rayonnant et l'intérieur du véhicule. Cette barrière électromagnétique permet de limiter les perturbations dues aux éléments situés derrière l'absorbeur (lorsqu'il s'agit d'un absorbeur d'un pare-chocs avant), notamment les perturbations dues à la rotation du ventilateur. Grâce à la barrière électromagnétique, la zone de détection du capteur est limitée à l'extérieur du véhicule.

Un absorbeur selon l'invention peut en outre comporter l'une ou plusieurs des caractéristiques suivantes :
- l'enveloppe conductrice est formée par surmoulage d'une feuille conductrice, par exemple métallique ;
- l'enveloppe conductrice est formée par un ruban adhésif conducteur ;
- l'enveloppe conductrice est formée par de la peinture comprenant des particules conductrices ;
- l'absorbeur est réalisé en mousse ;
- l'absorbeur est réalisé en polypropylène ou en polyéthylène ; et
- l'absorbeur a une structure en nid d'abeille.

L'invention sera mieux comprise à la lecture de la description qui va suivre, donnée uniquement à titre d'exemple et faite en se référant aux dessins annexés dans lesquels :
- la figure 1 est une vue est perspective d'un absorbeur selon un mode de réalisation de l'invention ;
- la figure 2 est une vue en section selon II-II de l'absorbeur de la figure 1 monté dans une peau de pare-chocs devant une poutre de choc ; et
- la figure 3 est une vue analogue à la figure 2, selon la section III-III.

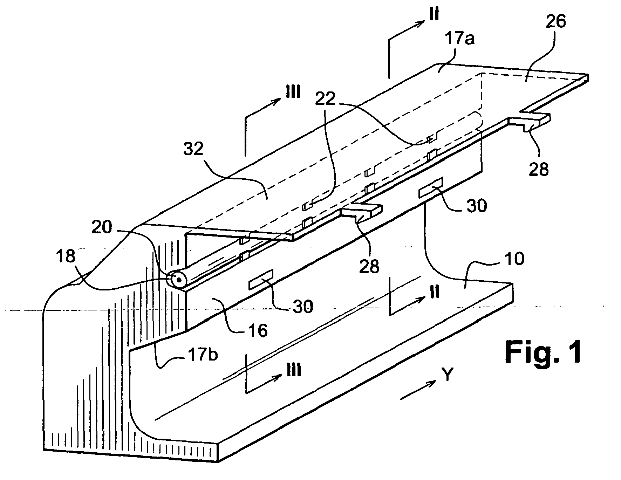

L'absorbeur 10 de la figure 1 présente une direction longitudinale Y qui correspond à la direction transversale du véhicule.

Il a été réalisé par exemple par injection de polypropylène dans des conditions classiques d'injection de thermoplastiques.

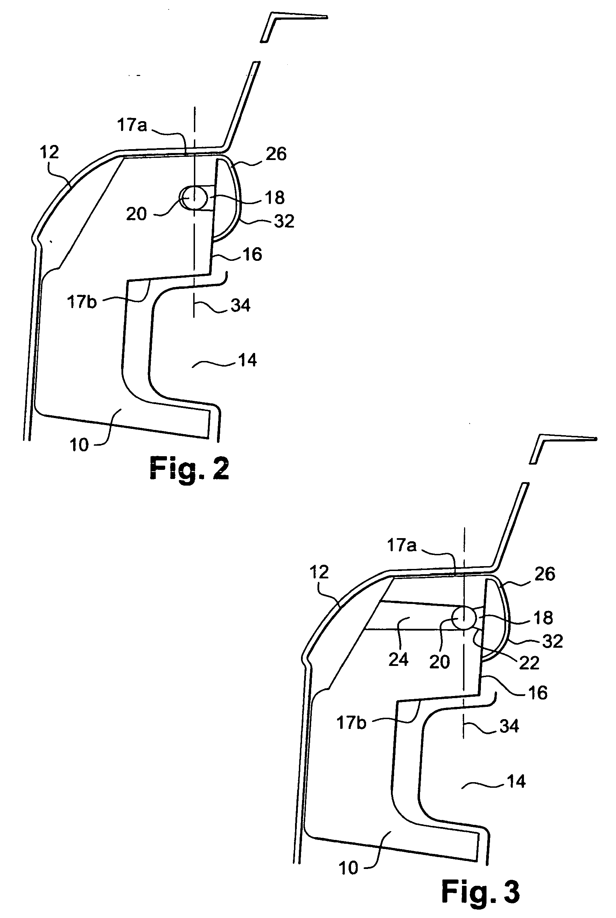

Comme représenté sur les figures 2 et 3, l'absorbeur 10 est monté dans une peau 12 de pare-chocs avant, devant une poutre 14 de pare-chocs.

L'absorbeur 10 comprend une face 16 arrière supérieure sur laquelle est ménagée une gorge 18 s'étendant selon la direction longitudinale Y, de manière à former un logement d'accueil pour un élément linéaire rayonnant 20. L'élément linéaire 20 est un câble coaxial.

La gorge 18 a sensiblement un profil en section en forme de U, comme représenté sur la figure 2.

Le câble coaxial 20 est maintenu en position dans la gorge 18 au moyen de bossages 22 ménagés à proximité du bord de sortie de la gorge 18. Les bossages 22 sont disposés par paires pour réaliser localement un rétrécissement de l'épaisseur de la gorge 18. En d'autres termes, les bossages 22 réalisent des mâchoires de rétention du câble 20.

Les bossages 22 sont venus de moulage avec l'absorbeur 10. Pour permettre le démoulage de l'absorbeur 10 malgré la forme en contre-dépouille des bossages 22, le moule comprend classiquement des poinçons. Ces poinçons sont à l'origine des canaux 24 traversant l'absorbeur 10 à la même abscisse longitudinale que celle des bossages 22. Un de ces canaux 24 est représenté sur la figure 3 qui est une vue en section de l'absorbeur 10 au niveau d'un des bossages 22.

L'absorbeur 10 comprend un écran 26 destiné à recouvrir sa face arrière 16. L'écran 26 est formé par une large bande venue de moulage avec l'absorbeur 10 et s'étendant selon la direction longitudinale Y. L'écran 26 prend naissance à l'extrémité supérieure de l'absorbeur 10 et se recourbe de manière à recouvrir intégralement la gorge 18 comme représenté sur les figures 2 et 3.

La fixation de l'extrémité libre de l'écran sur l'absorbeur 10 est réalisée par l'insertion de clips 28 de l'écran dans des orifices 30 de l'absorbeur 10.

La face externe de l'écran 26 est munie d'une enveloppe conductrice 32 réalisée par exemple au moyen d'une peinture contenant des particules conductrices.

Cette enveloppe conductrice 32 peut s'étendre également sur la face arrière 16 de l'absorbeur, en dessous de l'écran 26, ainsi que sur les faces externes sensiblement horizontales 17a et 17b de cet absorbeur, au-dessus et en-dessous de la gorge 18, de manière à constituer une barrière électromagnétique empêchant toute détection par le câble coaxial 20 vers l'intérieur de véhicule, au delà d'un plan sensiblement vertical 34 passant par l'axe de câble 20.

A cet effet, l'enveloppe conductrice 32 peut être constituée par une couche d'une peinture conductrice, ou un film collé, rapporté après mise en place du câble. Elle peut aussi être constituée par deux parties : l'une sur l'écran, l'autre sur les faces de l'absorbeur, ces deux parties se rejoignant lors du rabattage de la bande 26. Dans ce cas, les deux parties peuvent préexister sur l'absorbeur avant la mise en place du câble, par exemple sous la forme de films conducteurs surmoulés.

La gorge longitudinale accueillant l'élément linéaire rayonnant peut être ménagée sur la face avant, la face supérieure ou la face inférieure de l'absorbeur.

## Revendications

1. Absorbeur (10) de pare-chocs de véhicule, **caractérisé en ce qu'**il comprend :
- un logement (18) apte à accueillir un élément (20) linéaire rayonnant, le logement (18) étant formé par une gorge (18) longitudinale ménagée sur un côté de l'absorbeur (10), et
- un écran (26) du côté de l'absorbeur où débouche la gorge,
dans lequel, le logement (18) et l'écran (26) sont conformés de manière à maintenir l'élément (20) linéaire rayonnant à une certaine distance de pièces du véhicule susceptibles de perturber son fonctionnement.

2. Absorbeur (10) selon la revendication 1, dans lequel le logement (18) comprend des moyens (22) mécaniques de fixation de l'élément (20) linéaire rayonnant.

3. Absorbeur (10) selon la revendication 2, dans lequel les moyens (22) de fixation sont formés par au moins un rétrécissement local de l'épaisseur de la gorge (18).

4. Absorbeur (10) selon l'une quelconque des revendications précédentes, dans lequel la gorge (18) longitudinale et l'écran (26) sont ménagés du coté de l'absorbeur (10) dirigé vers l'intérieur du véhicule.

5. Absorbeur (10) selon l'une quelconque des revendications précédentes, dans lequel l'écran (26) est formé par une large bande venue de matière avec l'absorbeur (10) et s'étendant sensiblement parallèlement au logement (18), la bande prenant naissance d'un côté du logement (18) et étant apte à se recourber de manière à recouvrir intégralement le logement (18).

6. Absorbeur (10) selon la revendication 5, dans lequel l'extrémité libre de la bande comprend au moins un clip (28) apte à s'insérer dans au moins un orifice (30) ménagé dans l'absorbeur (10).

7. Absorbeur (10) selon l'une quelconque des revendications 4 à 6, dans lequel l'écran (26) comprend une enveloppe conductrice (32) destinée à réaliser une barrière électromagnétique entre l'élément linéaire rayonnant et l'intérieur du véhicule.

8. Absorbeur (10) selon la revendication 7, dans lequel l'enveloppe conductrice (32) est formée par surmoulage d'une feuille conductrice, par exemple métallique.

9. Absorbeur (10) selon la revendication 7, dans lequel l'enveloppe conductrice (32) est formée par un ruban adhésif conducteur.

10. Absorbeur (10) selon la revendication 7, dans lequel l'enveloppe conductrice (32) est formée par de la peinture comprenant des particules conductrices.

11. Absorbeur (10) selon l'une quelconque des revendications 1 à 10, réalisé en mousse.

12. Absorbeur (10) selon l'une quelconque des revendications 1 à 11, réalisé en polypropylène ou en polyéthylène.

13. Absorbeur (10) selon la revendication 12, ayant une structure en nid d'abeille.

## Claims

1. A vehicle bumper impact absorber (10), **characterized in that** it comprises:
• a housing (18) suitable for receiving a linear radiating element (20), the housing (18) being formed by a longitudinal groove (18) provided on one side of the absorber (10); and
• a screen (26) on the side of the absorber into which the groove opens out;
wherein the housing (18) and the screen (26) are shaped in such a manner as to hold the linear radiating element (20) at a certain distance from components of the vehicle that might disturb its operation.

2. An absorber (10) according to claim 1, wherein the housing (18) includes mechanical fastener means (22) for the linear radiating element (20).

3. An absorber (10) according to claim 2, wherein the fastener means (22) are formed by at least one local narrowing of the width of the groove (18).

4. An absorber (10) according to any preceding claim,
wherein the longitudinal groove (18) and the screen (26) are formed on the side of the absorber (10) that is directed towards the inside of the vehicle.

5. An absorber (10) according to any preceding claim,
wherein the screen (26) is formed by a broad strip made integrally with the absorber (10) and extending substantially parallel to the housing (18), the strip beginning on one side of the housing (18) and being suitable for curving so as to cover the housing (18) completely.

6. An absorber (10) according to claim 5, wherein the free end of the strip includes at least one clip (28) suitable for inserting in at least one orifice (30) formed in the absorber (10).

7. An absorber (10) according to any one of claims 4 to 6, wherein the screen (26) includes a conducive casing (32) for constituting an electromagnetic barrier between the linear radiating element and the inside of the vehicle.

8. An absorber (10) according to claim 7, wherein the conductive casing (32) is formed by overmolding a conductive sheet, e.g. a metal sheet.

9. An absorber (10) according to claim 7, wherein the conductive casing (32) is formed by a conductive adhesive tape.

10. An absorber (10) according to claim 7, wherein the conducive casing (32) is formed by paint including conductive particles.

11. An absorber (10) according to any one of claims 1 to 10, made of foam.

12. An absorber (10) according to any one of claims 1 to 11, made of polypropylene or of polyethylene.

13. An absorber (10) according to claim 12, having a honeycomb structure.

## Patentansprüche

1. Fahrzeug-Stoßfängerabsorber (10), **dadurch gekennzeichnet, dass** er Folgendes umfasst:
- eine Aufnahme (18) zum Unterbringen eines geradlinigen Abstrahlelements (20), wobei die Aufnahme (18) durch eine längsverlaufende Hohlkehle (18) geformt wird, die auf einer Seite des Absorbers (10) vorgesehen ist, und
- eine Abdeckplatte (26) auf der Seite des Absorbers, wo die Hohlkehle einmündet,
wobei die Aufnahme (18) und die Abdeckplatte (26) derart in dem Absorber angeordnet sind, dass sie das geradlinige Abstrahlelement (20) in einem bestimmten Abstand von den Teilen des Fahrzeugs halten, die möglicherweise seine Funktion beeinträchtigen könnten.

2. Absorber (10) nach Anspruch 1, in dem die Aufnahme (18) mechanische Mittel (22) zum Fixieren des geradlinigen Abstrahlelements (20) umfasst.

3. Absorber (10) nach Anspruch 2, in dem die Mittel (22) zum Fixieren durch mindestens eine lokale Dickenverminderung der Hohlkehle (18) gebildet werden.

4. Absorber (10) nach einem der vorangehenden Ansprüche, in dem die längsverlaufende Hohlkehle (18) und die Abdeckplatte (26) an der Seite des Absorbers (10) angeordnet sind, die ins Innere des Fahrzeugs weist.

5. Absorber (10) nach einem der vorangehenden Ansprüche, in dem die Abdeckplatte (26) durch einen mit dem Absorber (10) einstückig hergestellten breiten Streifen geformt wird und sich im Wesentlichen parallel zur Aufnahme (18) erstreckt, wobei der Streifen seinen Anfang an einer Seite der Aufnahme (18) nimmt und sich derart verbiegen kann, dass er die Aufnahme (18) völlig abdeckt.

6. Absorber (10) nach Anspruch 5, in dem das freie Ende des Streifens mindestens eine Einrastzunge (28) umfasst, die in mindestens eine Öffnung (30) eingeführt werden kann, die in dem Absorber (10) vorgesehen ist.

7. Absorber (10) nach einem der Ansprüche 4 bis 6, in dem die Abdeckplatte (26) eine leitende Umhüllung (32) umfasst, die dazu dient, eine elektromagnetische Sperre zwischen dem geradlinigen Abstrahlelement und dem Inneren des Fahrzeugs herzustellen.

8. Absorber (10) nach Anspruch 7, in dem die leitende Umhüllung (32) durch Aufformen einer leitenden dünnen Folie, die z.B. aus Metall bestehen kann, gebildet wird.

9. Absorber (10) nach Anspruch 7, in dem die leitende Umhüllung (32) durch ein leitendes, selbstklebendes Band gebildet wird.

10. Absorber (10) nach Anspruch 7, in dem die leitende Umhüllung (32) durch Farbe gebildet wird, die leitfähige Partikel enthält.

11. Absorber (10) nach einen der Ansprüche 1 bis 10, der aus einem Schaum hergestellt wird.

12. Absorber (10) nach einen der Ansprüche 1 bis 11, der aus Polypropylen oder aus Polyethylen hergestellt wird.

13. Absorber (10) nach Anspruch 12, wobei der Absorber eine Wabenstruktur aufweist.
